# EUROPEAN PATENT APPLICATION

(11) **EP 4 503 538 A1**
(43) Date of publication of application: **05.02.2025**
(21) Application number: 22938260.1
(22) Date of filing: 08.11.2022
(51) Int. Cl.: H04L 41/083

(54) **VIRTUAL NETWORK MANAGEMENT METHOD AND RELATED APPARATUS**

(30) Priority: 22.04.2022 CN 202210429337
(71) Applicant: Huawei Cloud Computing Technologies Co., Ltd., Gui'an New District, Guizhou 550025 (CN)
(72) Inventor: HUANG, Ting, Gui'an New District Guizhou 550025 (CN); GU, Jiongjiong, Gui'an New District Guizhou 550025 (CN); YU, Shanqing, Gui'an New District Guizhou 550025 (CN)
(74) Representative: Isarpatent
(86) International application number: PCT/CN2022/130558
(87) International publication number: WO 2023/202041

(57) **Abstract**

This application provides a virtual network management method. The method includes: presenting a virtual network configuration interface to a user; receiving an attribute that is of a target virtual network in a public cloud and that is configured by the user via the virtual network configuration interface, where the target virtual network is a virtual network used to bear a target service; and then providing the attribute of the target virtual network to a target node in the public cloud, where the attribute of the target virtual network is used by the target node to join the target virtual network. In this method, the virtual network configuration interface is provided, so that a topology structure, an access policy, or a routing policy of a virtual network can be customized based on an underlay bearer network, to flexibly meet requirements of different services. This resolves a problem that great constraints and dependencies exist because an entire network shares one topology structure or uses a same access policy or routing policy in a related technology.

## Description

This application claims priority to Chinese Patent Application No. 202210429337.9, filed with the China National Intellectual Property Administration on April 22, 2022 and entitled "VIRTUAL NETWORK MANAGEMENT METHOD AND RELATED APPARATUS", which is incorporated herein by reference in its entirety.

### TECHNICAL FIELD

This application relates to the field of Internet technologies, and in particular, to a virtual network management method and apparatus, a controller, a virtual network management system, a computer-readable storage medium, and a computer program product.

### BACKGROUND

With the advent of the 5th generation (5th generation, 5G) mobile communication era, Internet applications present a new development trend. Emerging Internet applications such as online games, cloud desktops, cloud phones, cloud communication, and augmented reality (augmented reality, AR)/virtual reality (virtual reality, VR) have increasingly high requirements on a network delay, a throughput rate, and a packet loss rate.

Network operators may provide network services for Internet applications of a plurality of services via an overlay (overlay) network. The overlay network is also referred to as an overlay network. In the overlay network, one data packet is encapsulated in another data packet, and the encapsulated data packet is disassembled after being forwarded to a tunnel endpoint through a tunnel between host machines.

Currently, the network operators usually perform networking in a full-mesh (Full-Mesh) manner to form the foregoing overlay network. Full-mesh (Full-Mesh) is a networking mode in which every two of N nodes are fully meshed. However, it is difficult for this networking mode to meet different quality of service (Quality of Service, QoS) requirements of a plurality of services.

### SUMMARY

This application provides a virtual network management method. In this method, a virtual network configuration interface is provided, so that a topology structure, an access policy, or a routing policy of a virtual network can be customized based on an underlay bearer network in a public cloud, to flexibly meet requirements of different services. This resolves a problem that great constraints and dependencies exist because an entire network shares one topology structure or uses a same access policy or routing policy in a related technology. This application further provides a virtual network management apparatus, a controller, a virtual network management system, a computer-readable storage medium, and a computer program product that correspond to the foregoing method.

According to a first aspect, this application provides a virtual network management method. The method may be performed by a controller. A virtual network management apparatus may be deployed on the controller. The virtual network management apparatus may be a software apparatus. The controller runs the foregoing software apparatus to implement a virtual network management function. The controller may implement registration and management, topology management, performance management, configuration delivery, and path computation of an acceleration node, and guide the acceleration node to select an optimal path for forwarding traffic through commanding.

Specifically, the controller may present a virtual network configuration interface to a user, receive an attribute that is of a target virtual network in a public cloud and that is configured by the user via the virtual network configuration interface, where the target virtual network is a virtual network used to bear a target service, and then provide the attribute of the target virtual network to a target node in the public cloud. The attribute of the target virtual network is used by the target node to join the target virtual network.

In this method, the controller may customize (by using software) a topology structure, an access policy, or a routing policy of a virtual network based on an underlay bearer network in the public cloud and based on the attribute that is of the target virtual network and that is configured by the user, to flexibly meet requirements of different services. This resolves a problem that great constraints and dependencies exist because an entire network shares one topology structure or uses a same access policy or routing policy in a related technology.

In some possible implementations, the attribute of the target virtual network includes one or more of a topology identifier, an acceleration identifier, a routing policy, and a source routing table. The topology identifier identifies a topology structure of the target virtual network, and the acceleration identifier identifies an access policy of the target virtual network.

In this way, the controller may establish a personalized target virtual network, to flexibly meet the requirements of different services. For example, the controller may establish target virtual networks of different topology structures, to meet the requirements of different services, or establish target virtual networks on which routing is performed based on different routing policies, to meet the requirements of different services.

In some possible implementations, the target node in the public cloud may serve as an access node or a forwarding node. When the target node serves as the access node, the controller may provide one or more of the topology identifier, the acceleration identifier, the routing policy, and the source routing table to the access node. When the target node serves as the forwarding node, the controller may provide one or more of the topology identifier, the acceleration identifier, and the routing policy to the forwarding node.

The topology identifier, the acceleration identifier, the routing policy, and the source routing table are attributes of the target virtual network. For an attribute that is not provided by the controller, the access node or the forwarding node may use a default value. For example, when the controller does not provide the routing policy, the access node or the forwarding node may use a default routing policy.

In this method, for the target node serving as the access node or the target node serving as the forwarding node, the controller may provide a corresponding attribute in a targeted manner, so that the target node serving as the access node implements an access function, and the target node serving as the forwarding node implements a forwarding function.

In some possible implementations, the attribute that is of the target virtual network and that is configured by the user includes the topology identifier. Before providing the attribute of the target virtual network to the target node in the public cloud, the controller may further determine the target node based on the topology structure corresponding to the topology identifier.

In this method, the controller may determine, based on the topology identifier of the topology structure customized by the user, the target node that joins the target virtual network. In this way, it can be avoided that the entire network shares one topology structure, to cause all nodes to participate in path computation and affect network service performance.

In some possible implementations, the controller may further group a plurality of nodes in the public cloud. Correspondingly, the controller may receive the topology structure that is of the target virtual network and that is configured by the user based on the grouped nodes in the virtual network configuration interface, and obtain the topology identifier of the topology structure.

After grouping the plurality of nodes in the public cloud, the controller may provide convenience for the user to configure a topology node of a virtual network. The user may configure a corresponding topology structure based on the grouped nodes, to meet a requirement of a corresponding service.

In some possible implementations, when grouping the nodes in the public cloud, the controller may receive a grouping basis configured by the user via the virtual network configuration interface, and then group the nodes in the public cloud based on the grouping basis.

The method can simplify a grouping operation. In addition, the method may implement grouping according to a requirement of a user, and provide help for the user to configure the topology structure of the target virtual network.

In some possible implementations, the grouping basis includes one or more of home attributes of the nodes, geographical locations of the nodes, node types of the nodes, and computer room types of the nodes. A home attribute of a node identifies whether the user has a control right of the node. A geographical location of a node identifies a country, a city, or a region in which the node is located. A node type of a node identifies that the node serves as the forwarding node or the access node. A computer room type of a node identifies whether a computer room in which the node is located is a single-line computer room or a three-line computer room.

In this method, the controller provides different types of grouping bases, so that the user can group the plurality of nodes in the public cloud through a simple selection operation. This reduces grouping difficulty.

In some possible implementations, when grouping the nodes in the public cloud, the controller may further first receive a candidate node configured by the user via the virtual network configuration interface. The candidate node is a part or all of nodes in the public cloud. Then, the controller groups the candidate node.

In this way, the controller may select, from specific nodes of the public cloud, the target node that is configured to join the target virtual network, to meet a requirement for configuring the topology structure of the target virtual network in a personalized manner.

In some possible implementations, the attribute that is of the target virtual network and that is configured by the user includes at least one of the access policy and the routing policy. The controller may receive at least one of the access policy and the routing policy that are of the target virtual network and that are configured by the user via the virtual network configuration interface. The access policy or the routing policy meets a customer level or a service type of the target service.

The user may be an administrator of a tenant. The tenant may deploy a plurality of services. Each service may be considered as a customer. The customer level may include different levels, for example, may include different levels such as gold, silver, and bronze. For example, the tenant is an online education platform. An administrator of the online education platform may deploy a plurality of services in a cloud environment, for example, an online one-to-one teaching service, an online small-class teaching service, and an online large-class teaching service. Customer levels corresponding to the foregoing services are respectively gold, silver, and bronze. Online one-to-one teaching at a gold level has a high requirement on a delay, and a delay-first access policy may be configured.

The service types may include a game, a long video, a meeting, and the like. In some embodiments, the user may also configure a corresponding access policy and routing policy based on the service type. For example, the user may configure an access policy corresponding to a meeting service as a delay-first access policy, and configure an access policy corresponding to a long video service as a cost-first access policy.

In some possible implementations, the access policy includes one or more of a proximity-based access policy, the delay-first access policy, and the cost-first access policy.

In this method, the controller may provide a plurality of access policies, so that the user configures, for the target virtual network, one access policy or a hybrid access policy obtained by mixing a plurality of access policies, to flexibly meet a requirement of the target service.

In some possible implementations, the routing policy includes one or more of a maximum hop count-based routing policy, a delay-first routing policy, a cost-first routing policy, a packet loss rate-first routing policy, or a topology identifier-based routing policy.

In this method, the controller may provide a plurality of routing policies, so that the user configures, for the target virtual network, one routing policy or a hybrid routing policy obtained by mixing a plurality of routing policies, to flexibly meet a requirement of the target service.

In some possible implementations, the controller may further receive node information provided by the target node in the target virtual network. The node information may include one or more of a node health status, a node processing delay (for example, an average delay of processing a data packet), node load, and the like. Correspondingly, the controller may set the attribute of the target virtual network based on the node information.

In this method, the controller may adaptively set the attribute of the target virtual network based on the node information provided by the target node, to dynamically meet a requirement of the target service.

In some possible implementations, the target service includes a cloud meeting or online education. The cloud meeting can be classified into a common meeting and a high-confidentiality meeting based on a confidentiality level. Similarly, online education can be classified into online one-to-one teaching, online small-class teaching, and online large-class teaching based on a scale.

In this way, the virtual network management method in this embodiment of this application may be applied to different scenarios, to establish corresponding virtual networks for different services, so as to flexibly meet the requirements of different services.

According to a second aspect, this application provides a virtual network management apparatus. The method includes:
an interaction module, configured to present a virtual network configuration interface to a user, where
the interaction module is further configured to receive an attribute that is of a target virtual network in a public cloud and that is configured by the user via the virtual network configuration interface, and the target virtual network is a virtual network used to bear a target service; and
a providing module, configured to provide the attribute of the target virtual network to a target node in the public cloud, where the attribute of the target virtual network is used by the target node to join the target virtual network.

In some possible implementations, the attribute of the target virtual network includes one or more of a topology identifier, an acceleration identifier, a routing policy, and a source routing table. The topology identifier identifies a topology structure of the target virtual network, and the acceleration identifier identifies an access policy of the target virtual network.

In some possible implementations, the providing module is specifically configured to:
when the target node serves as an access node, provide one or more of the topology identifier, the acceleration identifier, the routing policy, and the source routing table to the access node; or
when the target node serves as a forwarding node, provide one or more of the topology identifier, the acceleration identifier, and the routing policy to the forwarding node.

In some possible implementations, the attribute that is of the target virtual network and that is configured by the user includes the topology identifier, and the apparatus further includes:
a determining module, configured to determine the target node based on the topology structure corresponding to the topology identifier.

In some possible implementations, the apparatus further includes:
a grouping module, configured to group a plurality of nodes in the public cloud.

The interaction module is specifically configured to:
receive the topology structure that is of the target virtual network and that is configured by the user based on the grouped nodes in the virtual network configuration interface, and obtain the topology identifier of the topology structure.

In some possible implementations, the grouping module is specifically configured to:
receive a grouping basis configured by the user via the virtual network configuration interface; and
group the nodes in the public cloud based on the grouping basis.

In some possible implementations, the grouping basis includes one or more of home attributes of the nodes, geographical locations of the nodes, node types of the nodes, and computer room types of the nodes.

In some possible implementations, the grouping module is specifically configured to:
receive a candidate node configured by the user via the virtual network configuration interface, where the candidate node is a part or all of nodes in the public cloud; and
group the candidate node.

In some possible implementations, the attribute that is of the target virtual network and that is configured by the user includes at least one of the access policy and the routing policy, and the interaction module is specifically configured to:
receive at least one of the access policy and the routing policy that are of the target virtual network and that are configured by the user via the virtual network configuration interface, where the access policy or the routing policy meets a customer level or a service type of the target service.

In some possible implementations, the access policy includes one or more of a proximity-based access policy, a delay-first access policy, and a cost-first access policy.

In some possible implementations, the routing policy includes one or more of a maximum hop count-based routing policy, a delay-first routing policy, a cost-first routing policy, a packet loss rate-first routing policy, or a topology identifier-based routing policy.

In some possible implementations, the interaction module is further configured to:
receive node information provided by the target node in the target virtual network.

The apparatus further includes:
a setting module, configured to set the attribute of the target virtual network based on the node information.

In some possible implementations, the target service includes a cloud meeting or online education.

According to a third aspect, this application provides a controller. The controller includes at least one processor and at least one memory. The at least one processor and the at least one memory communicate with each other. The at least one processor is configured to execute instructions stored in the at least one memory, so that the controller performs the virtual network management method according to any one of the first aspect or the implementations of the first aspect.

According to a fourth aspect, this application provides a virtual network management system. The virtual network management system includes a controller and a target node. The controller is configured to perform the virtual network management method according to the first aspect, to enable the target node to join a target virtual network.

According to a fifth aspect, this application provides a computer-readable storage medium, where the computer-readable storage medium stores instructions, and the instructions instruct a computing device or a computing device cluster to perform the virtual network management method according to any one of the first aspect or the implementations of the first aspect.

According to a sixth aspect, this application provides a computer program product including instructions. When the computer program product is run on a computing device or a computing device cluster, the computing device or the computing device cluster is enabled to perform the virtual network management method according to any one of the first aspect or the implementations of the first aspect.

In this application, based on implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of an overlay network of a full-mesh architecture according to an embodiment of this application;
FIG. 2 is a diagram of establishing a plurality of virtual networks from an underlay bearer network according to an embodiment of this application;
FIG. 3 is a diagram of a system architecture of a virtual network management system according to an embodiment of this application;
FIG. 4 is a schematic flowchart of a virtual network management method according to an embodiment of this application;
FIG. 5 is an interface diagram of a configuration interface according to an embodiment of this application;
FIG. 6 is a diagram of a structure of a virtual network management apparatus according to an embodiment of this application; and
FIG. 7 is a diagram of a hardware structure of a controller according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

An Internet application, also referred to as an online application, is specifically an application that accesses the Internet to provide a corresponding service. According to different application purposes, Internet applications may include different types such as an online game application, an online office application, an online social application, and an online entertainment application.

Network operators usually use an overlay network (overlay network) to provide network services for Internet applications. An overlay network is a virtual logical network constructed through tunnels (tunnels) based on interworking between physical networks (which are also referred to as underlay bearer networks, underlay networks).

A tunnel is a channel constructed based on a tunneling protocol (tunneling protocol). The tunneling protocol is a network protocol. The network protocol (specifically, a sending protocol) may implement encapsulating a data frame or a data packet of another different network protocol in a load part, and then sending a re-encapsulated data packet. The tunneling protocol enables network services from a plurality of information sources to be transmitted in a point-to-point manner through different tunnels in the same infrastructure. In this way, data can be transmitted on an incompatible network, or a secure path can be provided on an insecure network, to meet requirements of different Internet applications or different tenants and improve infrastructure utilization.

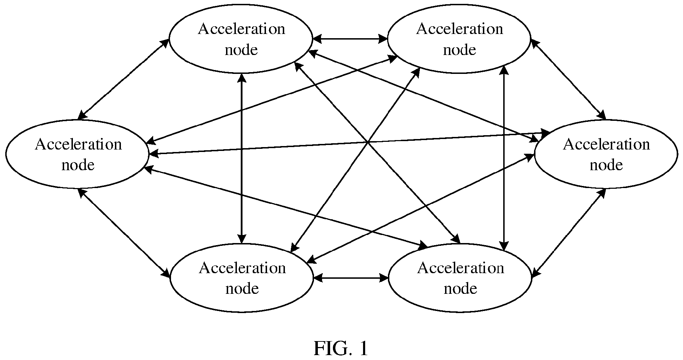

When providing network services, network operators usually need to ensure quality of service (quality of service, QoS). The quality of service may be measured by using an indicator such as a network delay, a throughput rate, or a packet loss rate. In many scenarios, network operators usually use a full-mesh (full-mesh) architecture to construct an overlay network. FIG. 1 is a diagram of a structure of an overlay network of a full-mesh architecture. The overlay network includes a plurality of acceleration nodes (Acceleration Nodes), where the acceleration nodes are configured to forward traffic on a data plane, and every two of the plurality of acceleration nodes are interconnected to each other. Specifically, a tunnel is established between any two of the plurality of acceleration nodes, which is equivalent to that each acceleration node is directly connected to another acceleration node, and traffic does not need to be transferred. In this way, a network delay can be greatly reduced.

However, a full-mesh networking mode enables an entire network to use a same topology structure, access policy, and routing policy, and it is difficult to meet requirements of different services. For example, some services are delay-sensitive and expect to use a full-mesh topology and a delay-first routing policy. Other services are cost-sensitive and expect to use a tree topology, use a high-cost acceleration node as a candidate node, and use a packet loss rate-first routing policy.

In view of this, an embodiment of this application provides a virtual network management method. The method may be performed by a controller (controller). A virtual network management apparatus is deployed on the controller. The virtual network management apparatus may be a software apparatus. The controller runs the software apparatus to implement a virtual network management function. The controller may implement registration and management, topology management, performance management, configuration delivery, and path computation of an acceleration node, and guide the acceleration node to select an optimal path for forwarding traffic through commanding.

Specifically, the controller may present a virtual network configuration interface to a user, and then receive an attribute that is of a target virtual network in a public cloud and that is configured by the user via the virtual network configuration interface. The target virtual network is a virtual network used to bear a target service. The attribute of the target virtual network may include one or more of a topology identifier, an acceleration identifier, a routing policy, and a source routing table of the target virtual network. Then, the controller may provide the attribute of the target virtual network to a target node in the public cloud. In this way, the target node may join the target virtual network based on the attribute of the target virtual network.

In this method, the controller may customize (by using software) a topology structure, an access policy, or a routing policy of a virtual network based on an underlay bearer network in the public cloud and based on the attribute that is of the target virtual network and that is configured by the user, to flexibly meet requirements of different services. This resolves a problem that great constraints and dependencies exist because an entire network shares one topology structure or uses a same access policy or routing policy in a related technology.

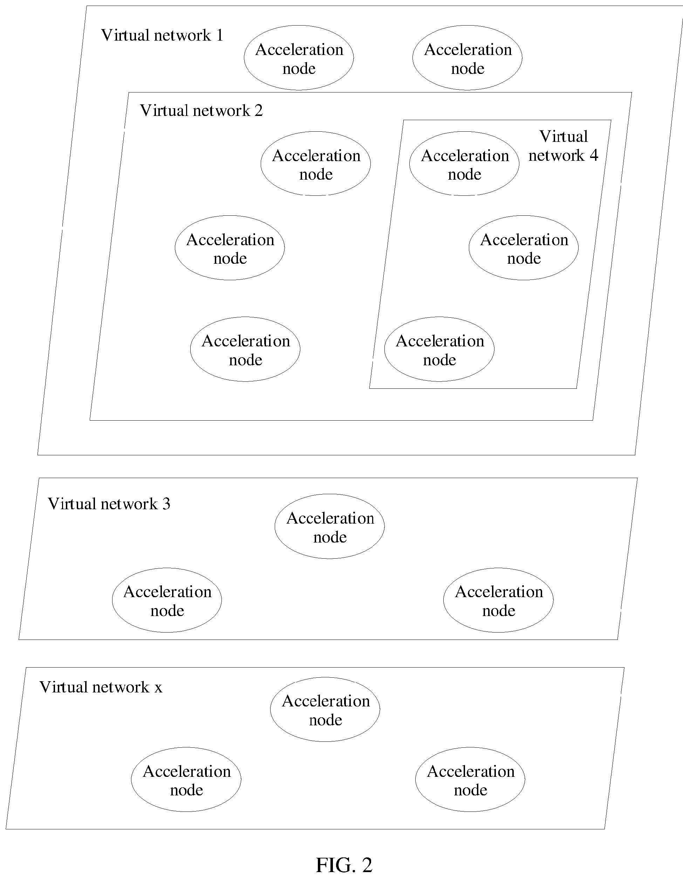

FIG. 2 is a diagram of establishing a plurality of virtual networks from an underlay bearer network of a public cloud. In this scenario, a controller may select, based on an attribute that is of a target virtual network and that is configured by a user, several acceleration nodes from acceleration nodes included in the underlay bearer network as target nodes, and provide the attribute of the target virtual network to the target nodes. The target nodes join the target virtual network based on the attribute of the target virtual network, to establish the target virtual network. As shown in FIG. 2, the target virtual network includes a plurality of virtual networks used to bear different services. A virtual network 1 includes N1 acceleration nodes and is configured to provide a network service for a common meeting service of an internal network (private network) or an external network (public network), for example, provide an Internet acceleration service or a campus private network acceleration service. A virtual network 2 includes N2 acceleration nodes and is configured to provide a network service for an online education service (such as online art education and online language education). The network service is specifically an Internet acceleration service. An acceleration node set included in the virtual network 2 is a subset of an acceleration node set included in the virtual network 1. In other words, the N2 acceleration nodes are some of the N1 acceleration nodes. A virtual network 3 includes N3 acceleration nodes and is configured to provide a network service for a high-confidentiality meeting service. The N3 acceleration nodes are exclusively occupied by the virtual network 3, and are not reused by another virtual network, so that a security requirement of the high-confidentiality meeting service is met. A virtual network 4 includes N4 acceleration nodes and is configured to implement Internet region acceleration according to a related regulation such as a privacy protection regulation.

To make the technical solutions of this application clearer and easier to understand, the following first describes a system architecture in embodiments of this application.

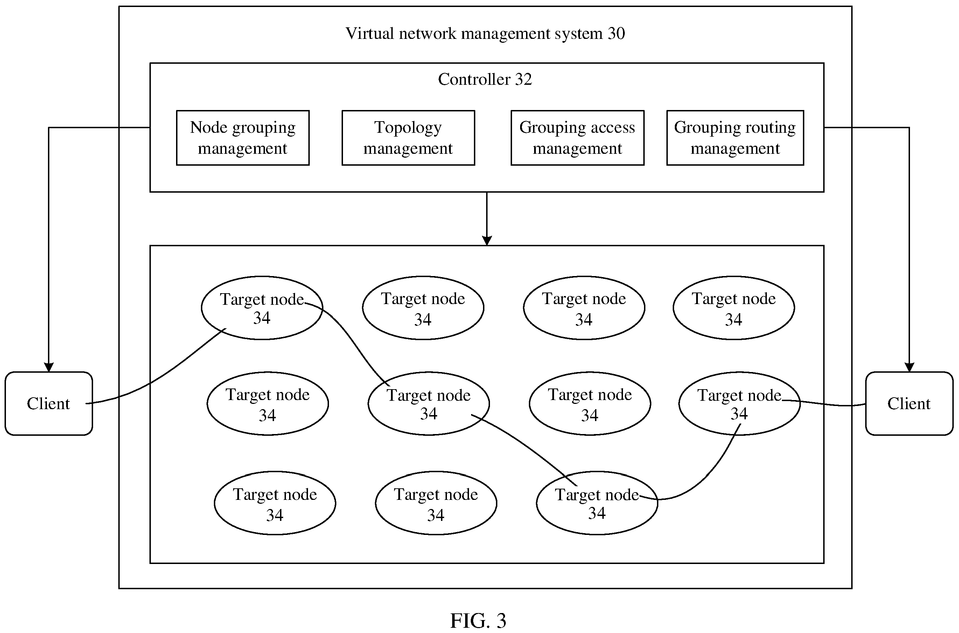

Refer to a diagram of an architecture of a virtual network management system shown in FIG. 3. The virtual network management system 30 includes a controller 32 and a target node 34. The target node 34 is an acceleration node in a public cloud, and the target node 34 is configured to join a target virtual network in the public cloud, to bear a target service by using the target virtual network. The following separately describes functions and specific implementations of the controller 32 and the target node 34.

Software having a virtual network management function is deployed on the controller 32, and the virtual network management function is implemented by executing program code of the foregoing software. The virtual network management function may include one or more of topology management, access policy management, and routing policy management. Further, the virtual network management function may further include node grouping management. Correspondingly, the access policy management may be grouping access policy management, and the routing policy management may be grouping routing policy management.

The foregoing software having the virtual network management function may be deployed in a computer cluster in a cloud region, and the computer cluster in which deployment is completed may serve as the controller 32. A cloud region (cloud region) is a geographical region of a physical data center. One cloud region may include one or more availability zones (availability zones, AZs). For ease of understanding, descriptions are provided below with reference to a specific example. In this example, a data center of a network operator may include a south China region, a north China region, and a central China region. The foregoing regions may further include a plurality of availability zones. For example, the South China region may include availability zones in city A and availability zones in city B. The computer cluster may include one or more computers, for example, include one or more servers. When the software having the virtual network management function is deployed in the plurality of servers, the plurality of servers may further perform load balancing or disaster recovery backup, to improve reliability of the controller 32.

The target node 34 is configured to provide an acceleration service for the target service. Specifically, the target node 34 may join the target virtual network, and transmit data of the target service by using the target virtual network, to provide the acceleration service for the target service. The target node 34 may implement different functions based on different locations of the target node 34 in the target virtual network. For example, the target node 34 may serve as an access node to implement an access function, or may serve as a forwarding node to implement a forwarding function.

The access node is a node that is in a virtual network and that can be directly connected to a client. In this embodiment, a direct connection is a connection that is not implemented through another acceleration node. The forwarding node is a node that is in a virtual network and that is not directly connected to a client, and is usually configured to receive data of a previous node and forward the data to a next node. The previous node may be an access node or another forwarding node, and similarly, the next node may be an access node or another forwarding node.

The access node may be a node or a terminal in an edge cloud. The edge cloud is an extension of the cloud region. The edge cloud deploys more devices with wider coverage at an edge of a network to provide a proximity-based access service. The terminal includes but is not limited to an optical line terminal (Optical Line Terminal, OLT).

The forwarding node may be a node or a point-of-presence (point-of-presence, POP) in the cloud region and the edge cloud. The point-of-presence is usually located outside the edge of the network and is an entry point for accessing an interior of the network. The point-of-presence may be usually provided by a network operator, and is an infrastructure that allows a remote user to connect to the Internet. The point-of-presence may be a router, a switch, a server, or another communication device.

In this embodiment, a plurality of target virtual networks may be established in the public cloud, and are respectively used to bear different target services. Based on this, one target node 34 may join the plurality of target virtual networks. Further, one target node 34 may serve as an access node in one virtual network, and serve as a forwarding node in another virtual network. This is not limited in this embodiment.

In this embodiment, the controller 32 may present a virtual network configuration interface to a user (for example, an operator or an administrator). The user may configure an attribute of the target virtual network in the public cloud via the virtual network configuration interface, where the target virtual network is a virtual network used to bear the target service. The attribute of the target virtual network may include one or more of a topology identifier, an acceleration identifier, a routing policy, and a source routing table of the target virtual network. For example, when the target service is a high-confidentiality meeting service, the user may configure the topology identifier and the routing policy of the target virtual network via the virtual network configuration interface. An acceleration node in a topology structure identified by the topology identifier is exclusively occupied by the target virtual network. The routing policy may be a delay-first routing policy. The controller 32 may receive the attribute that is of the target virtual network in the public cloud and that is configured by the user via the virtual network configuration interface, and provide the attribute of the target virtual network to the target node in the public cloud. The target node may be the acceleration node in the topology structure identified by the topology identifier configured by the user. The target node may join the target virtual network based on the attribute of the target virtual network, to provide the acceleration service for the target service such as the high-confidentiality meeting service.

The controller 32 may further group a plurality of nodes in a physical network such as an underlay bearer network, and then define a topology structure, an access policy (also referred to as an access policy), or a routing policy of a virtual network based on the grouped nodes, to implement grouping access or grouping routing.

The foregoing describes in detail a system architecture in embodiments of this application. The following describes a virtual network management method in an embodiment of this application. Before the foregoing method is performed, preparations may be performed first. Specifically, software used to implement a function of a controller 32 is deployed in a cloud region, an acceleration node serving as a forwarding node is deployed in the cloud region, an edge cloud, or a POP, and an acceleration node serving as an access node is deployed in the edge cloud or an OLT. After being started, the acceleration node initiates a handshake connection to the controller 32, to perform authentication. After the authentication succeeds, the acceleration node may further send a registration request to the controller 32, to request to be managed and registered. Further, after registration is completed, the acceleration node may further periodically send a heartbeat packet to the controller 32, so that the controller 32 can learn of a health status of each acceleration node in a timely manner, to further adjust a virtual network based on the health status.

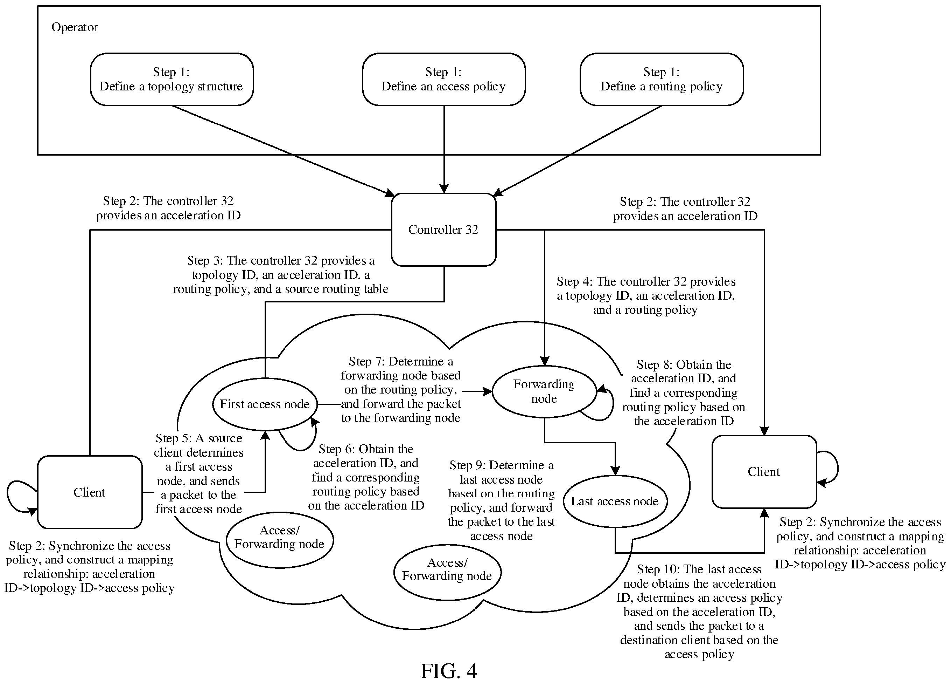

After the foregoing preparations are completed, the virtual network management method in this embodiment of this application may be performed. Refer to a flowchart of a virtual network management method shown in FIG. 4, the method includes the following steps.

Step 1: The controller 32 receives a topology structure that is of a virtual network and that is defined by a user to obtain a topology identifier, receives an access policy defined by the user to obtain an acceleration identifier, and receives a routing policy defined by the user.

Specifically, the controller 32 provides a virtual network configuration interface. The virtual network configuration interface may be a graphical user interface (graphical user interface, GUI) or a command user interface (command user interface, CUI). The CUI is also referred to as a console (console). The user may define one or more of the topology structure, the access policy, and the routing policy of the virtual network via the virtual network configuration interface. The user may further perform grouping management on acceleration nodes in an underlay bearer network via the virtual network configuration interface, to facilitate defining the topology structure of the virtual network based on the grouped nodes and implement grouping access and grouping routing.

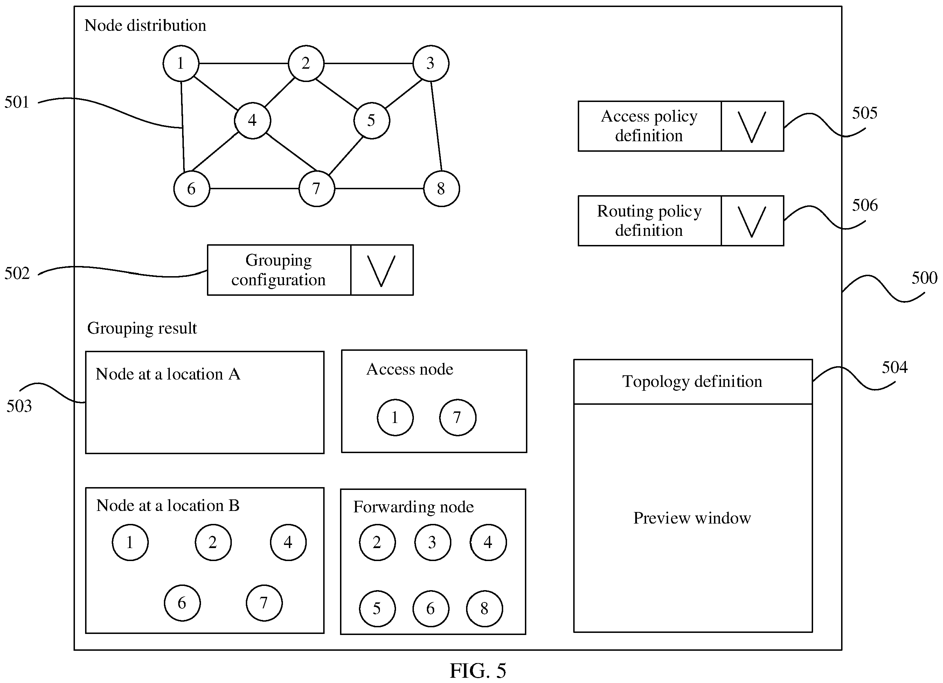

For ease of understanding, descriptions are provided below with reference to a specific example. Refer to an interface diagram of a virtual network configuration interface shown in FIG. 5. The virtual network configuration interface 500 displays a node distribution diagram 501 of the underlay bearer network, and the node distribution diagram 501 displays a set of acceleration nodes included in the underlay bearer network in a public cloud. Further, the node distribution diagram 501 further shows a physical connection relationship between the acceleration nodes in the public cloud. The controller 32 may further group a plurality of nodes (specifically, acceleration nodes) in the public cloud. The virtual network configuration interface 500 may display the grouped nodes. Correspondingly, the user may configure a topology structure of a target virtual network based on the grouped nodes in the virtual network configuration interface 500. The controller 32 may receive the topology structure that is of the target virtual network and that is configured by the user, to obtain the topology identifier.

When grouping the plurality of nodes in the public cloud, the controller 32 may receive a grouping basis configured by the user via a virtual web disk configuration interface, and group the plurality of nodes in the public cloud based on the grouping basis. Further, the user may further configure a candidate node via the virtual network configuration interface 500. The candidate node may be a part or all of nodes in the public cloud. For example, the user may select a part or all of nodes through clicking or box selection. Then, a grouping configuration control 502 borne on the configuration interface 500 is triggered to configure the grouping basis, to trigger an operation of grouping the candidate node. Correspondingly, the controller 32 may group the candidate node in response to the operation.

The grouping basis includes one or more of home attributes of the nodes (identifying whether the user has a control right of a node), geographical locations of the nodes (for example, a country, a city, or a region in which a node is located), and node types of the nodes (a forwarding node or an access node), and computer room types of the nodes (a single-line computer room or a three-line computer room). The user may select one or more of the foregoing grouping bases by using a drop-down box of the grouping configuration control 502. Correspondingly, the controller 32 may group the nodes in the underlay bearer network based on the foregoing grouping basis selected by the user. As shown in FIG. 5, the configuration interface 500 may further display a grouping result 503, where the grouping result includes the grouped nodes. The controller 32 may define the topology structure of the target virtual network based on the grouped nodes, and obtain the topology identifier of the target virtual network. The controller 32 may define the topology structure of the target virtual network based on the grouped nodes and with reference to a configuration of the user. Specifically, the user may select several nodes from the grouped nodes, and trigger a topology definition control 504. The controller 32 determines, as target nodes in response to a topology definition operation of the user, the nodes selected by the user from the grouped nodes, and defines the topology structure of the virtual network based on the target nodes. The topology structure may be represented by structured data. The structured data may include identifiers of the target nodes. Further, the user may further connect the nodes after selecting the nodes. Correspondingly, the structured data may further include a connection identifier of a connection between the nodes. It should be noted that, if the user does not manually perform connection, the controller 32 may determine that the target nodes in the target virtual network are connected in a default connection manner.

The controller 32 may allocate the topology identifier (identifier, ID) to the foregoing topology structure. The attribute of the virtual network includes the topology identifier. The topology identifier is unique. For example, the topology identifier may be generated by using a sequence number, a random number, or the like.

In some possible implementations, the configuration interface 500 may further bear an access policy definition control 505. The access policy definition control 505 includes a drop-down box, and the drop-down box includes a plurality of candidate access policies. The user may select one or more access policies in the drop-down box, to define the access policy of the virtual network, and the controller 32 receives the access policy defined by the user. In some embodiments, the drop-down box may include a proximity-based access policy, a delay-first access policy, and a cost-first access policy. The user may select one or more of the foregoing access policies according to a service requirement, to define the access policy of the virtual network.

The proximity-based access policy is an access policy in which an access node closest to a client is selected for access. The delay-first access policy is an access policy in which an access node with a minimum access delay is selected for access. The cost-first access policy is an access policy in which an access node with minimum access costs is selected for access.

In this embodiment, the controller 32 may further allocate an acceleration ID to the access policy. Similar to the topology ID, the acceleration ID is unique, and each acceleration ID identifies one access policy. Alternatively, the acceleration ID may be generated based on a sequence number (for example, an auto-increment sequence number) or a random number.

Similarly, the configuration interface 500 may further bear a routing policy definition control 506. The routing policy definition control 506 includes a drop-down box, and the drop-down box includes a plurality of candidate routing policies. The user may select one or more routing policies in the drop-down box, to define the routing policy of the virtual network. In some embodiments, the drop-down box may include a maximum hop count-based routing policy, a delay-first routing policy, a cost-first routing policy, a packet loss rate-first routing policy, or a topology identifier-based routing policy. The user may select one or more of the foregoing routing policies according to a service requirement, to define the routing policy of the virtual network.

A hop count is a quantity of routers between a source end (for example, a source client or a source network) and a destination end (for example, a destination client or a destination network). A path with a minimum hop count is considered as an optimal route to the destination end. The maximum hop count-based routing policy is a routing policy in which a maximum hop count is set to limit a maximum number of routers between the source end and the destination end, to prevent a routing loop. For example, if the maximum hop count is set to 15 in the maximum routing policy, a network is considered unreachable when the hop count is 16. The delay-first routing policy is a routing policy that minimizes an access delay. The cost-first routing policy is a routing policy that minimizes access costs. The packet loss rate-first routing policy is a routing policy that makes a packet loss rate low. In this way, a quantity of retransmitted data packets can be reduced. This is usually used in a scenario such as web page loading. The topology identifier-based routing policy is a routing policy for determining a path based on a topology structure corresponding to a topology identifier.

In this embodiment, the controller 32 may respectively establish target virtual networks for different target services. Based on this, when configuring the access policy or the routing policy, the user may configure the access policy and the routing policy based on a customer level or a service type of a target service. In this way, the access policy or the routing policy can meet the customer level or the service type of the target service.

The user may be an administrator of a tenant. The tenant may deploy a plurality of services. Each service may be considered as a customer. The customer level may include different levels, for example, may include different levels such as gold, silver, and bronze. For example, the tenant is an online education platform. An administrator of the online education platform may deploy a plurality of services in a cloud environment, for example, an online one-to-one teaching service, an online small-class teaching service, and an online large-class teaching service. Customer levels corresponding to the foregoing services are respectively gold, silver, and bronze. Online one-to-one teaching at the gold level has a high requirement on a delay, and the delay-first access policy may be configured. The service type may include a game, a live broadcast, a meeting, and the like. In some embodiments, the user may configure a corresponding access policy and routing policy based on the service type.

In this embodiment, the controller 32 may further determine a source routing table based on the topology structure and the routing policy of the virtual network. The source routing table is a routing table in which a source routing (source routing) algorithm is used to implement routing. The source routing algorithm is a route selection algorithm that does not require an intermediate node (such as a forwarding node) to maintain a routing table but requires the source end to undertake more heavy work. The source routing table includes a source end address and a destination end address. Further, the source routing table may further include a complete route to the destination end, and the complete route may be encapsulated in a packet header.

Step 2: The controller 32 provides the acceleration ID to the source client and the destination client, so that the source client and the destination client synchronize the access policy based on the acceleration ID, and construct a mapping relationship between the acceleration ID, the topology ID, and the access policy.

When the controller 32 defines a plurality of topology structures, the controller 32 may deliver acceleration IDs corresponding to the plurality of topology structures to clients that need to perform communication. Among the clients that need to perform communication, a client serving as an initiator is also referred to as the source client or the source end, and a client serving as a receiver is also referred to as the destination client or the destination end. After the controller 32 delivers the acceleration IDs to the clients, the clients may synchronize the access policy based on the acceleration IDs, for example, synchronize the access policy from the controller 32. Further, the controller may further deliver the topology ID. In this way, the clients may construct the mapping relationship between the acceleration ID, the topology ID, and the access policy. Specifically, the clients may maintain a mapping table. The mapping table includes the following mapping relationship:
acceleration ID->topology ID->access policy.

It should be noted that step 2 may not be performed when the virtual network management method in this embodiment of this application is performed. For example, in a networking phase, the controller 32 may not deliver the acceleration IDs to the clients first. The controller 32 may deliver the acceleration IDs to the clients when the clients perform communication.

Step 3: The controller 32 provides the topology ID, the acceleration ID, the routing policy, and the source routing table of the target virtual network to a target node 34 serving as an access node.

The target node 34 is an acceleration node that is in the public cloud and that is configured to join the target virtual network. Specifically, when the attribute that is of the target virtual network in the public cloud and that is configured by the user via the virtual network configuration interface 500 includes the topology identifier of the target virtual network, the controller 32 may further determine the target node based on the topology structure corresponding to the topology identifier. For example, the controller 32 may determine an acceleration node in the topology structure as the target node. In some embodiments, the user may alternatively customize the routing policy or the access policy without customizing the topology structure. Correspondingly, the controller 32 may directly determine an acceleration node in the underlay bearer network of the public cloud as the target node.

In this embodiment, for the target node 34 serving as the access node, the controller 32 may provide the topology ID, the acceleration ID, the routing policy, and the source routing table of the target virtual network to the target node 34. For example, the controller 32 may actively send the topology ID, the acceleration ID, the routing policy, and the source routing table of the target virtual network to the target node 34, or the target node 34 obtains the topology ID, the acceleration ID, the routing policy, and the source routing table of the target virtual network from the controller 32.

The topology ID, the acceleration ID, the routing policy, and the source routing table are all attributes of the target virtual network. In actual application, the controller 32 may provide one or more of the topology ID, the acceleration ID, the routing policy, and the source routing table to the target node 34 serving as the access node. For an attribute that is not provided by the controller 32, the access node may use a default setting or a default setting. For example, when the controller 32 does not send the routing policy, the access node may use a default routing policy.

The target node 34 serving as the access node may further maintain the mapping table. The mapping table includes the following mapping relationship:
acceleration ID->topology ID->access policy.

Step 4: The controller 32 provides the topology ID, the acceleration ID, and the routing policy to a target node 34 serving as a forwarding node.

In this embodiment, for the target node 34 serving as the forwarding node, the controller 32 may provide the topology ID, the acceleration ID, and the routing policy of the target virtual network to the target node 34. There may be a plurality of implementations in which the controller 32 provides the attributes of the target virtual network such as the topology ID, the acceleration ID, and the routing policy. In some implementations, the controller 32 may actively send the topology ID, the acceleration ID, and the routing policy of the target virtual network to the target node 34 serving as the forwarding node. In some other implementations, the target node 34 serving as the forwarding node may obtain the topology ID, the acceleration ID, and the routing policy of the target virtual network from the controller 32, so that the controller 32 provides the topology ID, the acceleration ID, and the routing policy of the target virtual network to the target node 34 serving as the forwarding node.

Similarly, the controller 32 may provide one or more attributes of the topology ID, the acceleration ID, and the routing policy to the target node 34 serving as the forwarding node. For an attribute that is not provided by the controller 32, the forwarding node may use a default setting or a default setting. For example, when the controller 32 does not send the routing policy, the forwarding node may use a default routing policy.

The forwarding node may further maintain the mapping table. The mapping table includes the following mapping relationship:
acceleration ID->topology ID->routing policy.

It should be noted that the foregoing step 3 and step 4 may be performed concurrently, or may be performed based on a specified sequence. For example, the controller 32 may first perform step 3 and then perform step 4, or the controller 32 first performs step 4 and then performs step 3. A sequence of performing step 3 or step 4 does not affect specific implementation of this embodiment of this application.

It should be further noted that, after the controller 32 provides the attribute of the target virtual network to the target node 34 serving as the access node or the target node 34 serving as the forwarding node, the target node 34 may join the corresponding target virtual network based on the attribute of the target virtual network. Correspondingly, the target virtual network may provide a network service for the client, to implement a corresponding function. The following provides detailed descriptions with reference to steps 5 to 10.

Step 5: The source client determines a first access node based on the access policy mapped by the acceleration ID, and sends a packet to the first access node.

In this embodiment, the access node may include the first access node and a last access node. The first access node is a node that receives a first-hop packet of the source client, and the last access node is a node that directly forwards the packet to the destination client without passing the packet through the forwarding node.

The source client may determine the access policy based on the acceleration ID and the mapping relationship that is between the acceleration ID and the access policy and that is maintained by the source client, and then determine the first access node based on the access policy, to forward the packet to the first access node. When logging in on the client, a customer may determine a corresponding acceleration ID based on account information, and further determine an access policy based on the acceleration ID, to forward data based on the access policy.

Step 6: The first access node obtains the acceleration ID in the packet, and finds a corresponding routing policy based on the acceleration ID.

Step 7: The first access node determines a forwarding node based on the routing policy, and forwards the packet to the forwarding node.

Specifically, the first access node maintains the mapping relationship between the acceleration ID, the topology ID, and the routing policy. The first access node may search the mapping relationship based on the acceleration ID, to obtain the routing policy corresponding to the acceleration ID. Then, the first access node may determine the forwarding node based on the source routing table and the corresponding routing policy, and forward the packet to the forwarding node.

Step 8: The forwarding node obtains the acceleration ID in the packet, and finds the corresponding routing policy based on the acceleration ID.

Step 9: The forwarding node determines the last access node based on the routing policy, and forwards the packet to the last access node.

Specifically, the forwarding node maintains the mapping relationship between the acceleration ID, the topology ID, and the routing policy. The forwarding node may search the mapping relationship based on the acceleration ID, to obtain the routing policy corresponding to the acceleration ID. Then, the forwarding node may determine the last access node based on the routing policy, and forward the packet to the last access node.

It should be noted that an embodiment shown in FIG. 4 is described by using an example in which the target virtual network includes one forwarding node and two access nodes. When the target virtual network includes more forwarding nodes, it may be further determined that a next node is another forwarding node when load from the current forwarding node to the last access node is high, and the packet is forwarded to the next forwarding node for forwarding, that is, the packet may be forwarded by more forwarding nodes, to reach the last access node.

Step 10: The last access node obtains the acceleration ID in the packet, determines an access policy based on the acceleration ID, and sends the packet to the destination client based on the access policy.

Compared with a full-mesh networking manner, the virtual network management method in this embodiment of this application may support node grouping management. Different services may have different customer registrations. After grouping, customers of different customer levels may have different forwarding nodes and access nodes. More forwarding nodes indicate more access nodes, better access effect, and higher network stability. In addition, an important forwarding node and an important access node may be reserved for an important customer and are not used by other nodes that are on an entire network and that are not of this account. This ensures node security. In this way, a problem that customer levels cannot be distinguished, customers of different levels all have all nodes in the entire network, and acceleration effect cannot reflect differentiation is resolved. In addition, the method can ensure data independence, and avoid mutual interference of data transmission between customers. In addition, the method may also support node grouping based on fees of different nodes, and provide selection of nodes of different levels based on prices and services.

Further, in a full-mesh architecture, all acceleration nodes are used to perform access or forwarding path computation. As a service scale increases and a quantity of acceleration nodes increases, path computation becomes increasingly time-consuming, and path update is slow. In addition, a forwarding path may be excessively long, and a single point of failure may occur. However, the virtual network management method in this embodiment of this application supports a customized topology structure, and can generate a personalized virtual network topology structure for a customer or several customers. This reduces a node scale, reduces computation of unnecessary nodes, accelerates a pathfinding speed of an acceleration node, reduces a network jitter, and the like.

In the full-mesh architecture, all access policies are unified on the entire network, and it is difficult to implement targeted optimization for a specific type of scenario, and acceleration effect is limited. The virtual network management method in this embodiment of this application supports grouping access policy management, and may select a proper access policy based on importance degrees, service scenarios, and access statuses of different customers. This ensures that different services can be separately optimized, so that final optimal effect is achieved.

It should be further noted that, in a full-mesh architecture, all routing policies are unified on the entire network. For example, in different service scenarios such as a video meeting, online education, and an entertainment game, routing policies are unified. Consequently, targeted optimization cannot be performed on a specific type of service scenario, and acceleration effect is limited. In this embodiment of this application, through grouping routing policy management, a proper routing policy can be selected for cases such as service scenarios, QoS quality requirements, delay requirements, and the like of different customers. This ensures that different services can be separately optimized, so that final optimal effect is achieved.

In this method, the controller 32 provides an application programming interface (application programming interface, API), for example, provides the API in a GUI manner, so that the user can dynamically configure a topology structure, an access policy, or a routing policy of a virtual network according to a service requirement, to flexibly meet different requirements of a plurality of services. When the access policy or the routing policy is dynamically configured, configuration of a weight ratio of a plurality of access policies or a weight ratio of a plurality of routing policies may also be supported, to provide a more flexible access policy or routing policy.

The weight ratio refers to performing traffic distribution based on a weight ratio. For ease of understanding, the following uses a weight ratio of a routing policy as an example for description. In this example, a routing policy of a virtual network used by a service is a hybrid routing policy in which a weight ratio of a delay-first routing policy, a cost-first routing policy, and a maximum hop count-based routing policy is 50%:30%:20%. Correspondingly, when receiving the packet, the target node 34 (for example, the target node 34 serving as the forwarding node) may select one routing policy from the foregoing three routing policies based on the weight ratio, and forward the packet based on a path indicated by the routing policy. The target node 34 may select, for a plurality of received packets, a corresponding routing policy based on the foregoing ratio to forward the packets.

Further, the controller 32 may further adjust the weight ratio according to a service requirement or a scenario change. The user may reconfigure the weight ratio of the routing policy or the access policy according to the service requirement or the scenario change, and the controller 32 may adjust the weight ratio of the routing policy or the access policy based on a configuration of the user. In some embodiments, the controller 32 may also automatically recognize the service requirement or the scenario change, and adjust the weight ratio of the routing policy or the access policy based on the service requirement or the scenario change.

In some possible implementations, as the target virtual network runs, the controller 32 may further adaptively configure the attribute of the target virtual network, for example, adaptively set the topology structure, the access policy, or the routing policy of the target virtual network. Specifically, the controller 32 receives node information provided by the target node 34 in the target virtual network. The node information may include one or more of a node health status, a node processing delay (for example, an average delay of processing a data packet), node load, and the like. The controller 32 may adaptively set the attribute of the target virtual network based on the foregoing node information.

For example, the node information provided by the target node 34 to the controller 32 is: When the target node 34 is in an unhealthy state, that is, the node health status is the unhealthy state, the controller 32 may reset the topology structure of the target virtual network, for example, delete an unhealthy node, add a healthy node, and update the topology identifier of the topology structure.

For another example, the node information provided by the target node 34 to the controller 32 is a node processing delay of the target node 34. When node processing delays of a plurality of target nodes 34 (for example, more than half of the target nodes 34) in the target virtual network are greater than a specified delay, the controller 32 may reset the routing policy of the target virtual network to a delay-first routing policy, or reset a weight of the delay-first routing policy when the routing policy is a hybrid routing policy.

The controller 32 may adaptively set the attribute of the target virtual network based on the node information by using an artificial intelligence (artificial intelligence, AI) technology. For example, the controller 32 may learn of historical data by using machine learning (machine learning) in the AI technology, to obtain an AI-based prediction capability model, an AI-based fault diagnosis capability model, or an AI-based automatic planning capability model through modeling.

In this way, the controller 32 may automatically adjust the access policy or the routing policy based on the prediction capability model, to improve robustness of the virtual network. The controller 32 may also automatically recover the virtual network based on the AI-based fault diagnosis capability model, or automatically divide the virtual network into a plurality of leased line networks based on the AI-based automatic planning capability model.

Based on the virtual network management method provided in embodiments of this application, an embodiment of this application further provides the foregoing virtual network management apparatus. The virtual network management apparatus may be a software apparatus or a hardware apparatus. In this embodiment of this application, an example in which the virtual network management apparatus is the software apparatus is used for description. The following describes the virtual network management apparatus provided in this embodiment of this application with reference to the accompanying drawings.

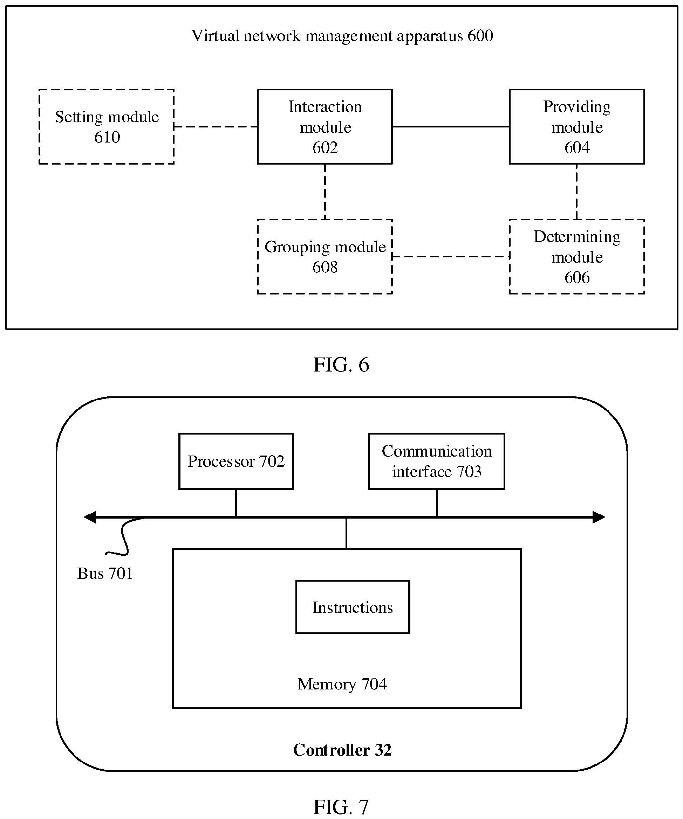

Refer to a diagram of a structure of a virtual network management apparatus shown in FIG. 6, the apparatus 600 includes:
an interaction module 602, configured to present a virtual network configuration interface to a user, where
the interaction module 602 is further configured to receive an attribute that is of a target virtual network in a public cloud and that is configured by the user via the virtual network configuration interface, and the target virtual network is a virtual network used to bear a target service; and
a providing module 604, configured to provide the attribute of the target virtual network to a target node in the public cloud, where the attribute of the target virtual network is used by the target node to join the target virtual network.

In some possible implementations, the attribute of the target virtual network includes one or more of a topology identifier, an acceleration identifier, a routing policy, and a source routing table. The topology identifier identifies a topology structure of the target virtual network, and the acceleration identifier identifies an access policy of the target virtual network.

In some possible implementations, the providing module 604 is specifically configured to:
when the target node serves as an access node, provide one or more of the topology identifier, the acceleration identifier, the routing policy, and the source routing table to the access node; or
when the target node serves as a forwarding node, provide one or more of the topology identifier, the acceleration identifier, and the routing policy to the forwarding node.

In some possible implementations, the attribute that is of the target virtual network and that is configured by the user includes the topology identifier, and the apparatus 600 further includes:
a determining module 606, configured to determine the target node based on the topology structure corresponding to the topology identifier.

In some possible implementations, the apparatus 600 further includes:
a grouping module 608, configured to group a plurality of nodes in the public cloud.

The interaction module 602 is specifically configured to:
receive the topology structure that is of the target virtual network and that is configured by the user based on the grouped nodes in the virtual network configuration interface, and obtain the topology identifier of the topology structure.

In some possible implementations, the grouping module 608 is specifically configured to:
receive a grouping basis configured by the user via the virtual network configuration interface; and
group the nodes in the public cloud based on the grouping basis.

In some possible implementations, the grouping basis includes one or more of home attributes of the nodes, geographical locations of the nodes, node types of the nodes, and computer room types of the nodes.

In some possible implementations, the grouping module 608 is specifically configured to:
receive a candidate node configured by the user via the virtual network configuration interface, where the candidate node is a part or all of nodes in the public cloud; and
group the candidate node.

In some possible implementations, the attribute that is of the target virtual network and that is configured by the user includes at least one of the access policy and the routing policy, and the interaction module 602 is specifically configured to:
receive at least one of the access policy and the routing policy that are of the target virtual network and that are configured by the user via the virtual network configuration interface, where the access policy or the routing policy meets a customer level or a service type of the target service.

In some possible implementations, the access policy includes one or more of a proximity-based access policy, a delay-first access policy, and a cost-first access policy.

In some possible implementations, the routing policy includes one or more of a maximum hop count-based routing policy, a delay-first routing policy, a cost-first routing policy, a packet loss rate-first routing policy, or a topology identifier-based routing policy.

In some possible implementations, the interaction module is further configured to:
receive node information provided by the target node in the target virtual network.

The apparatus 600 further includes:
a setting module 610, configured to set the attribute of the target virtual network based on the node information.

In some possible implementations, the target service includes a cloud meeting or online education.

The virtual network management apparatus 600 according to this embodiment of this application may correspondingly perform the method described in embodiments of this application, and the foregoing and other operations and/or functions of the modules/units of the virtual network management apparatus 600 are separately used to implement corresponding procedures implemented by the controller 32 in this method in an embodiment shown in FIG. 4. For brevity, details are not described herein again.

An embodiment of this application further provides a controller 32. The controller 32 is specifically configured to implement a function of the virtual network management apparatus 600 shown in FIG. 6.

FIG. 7 provides a diagram of a structure of a controller 32. As shown in FIG. 7, the controller 32 includes a bus 701, a processor 702, a communication interface 703, and a memory 704. The processor 702, the memory 704, and the communication interface 703 communicate with each other through the bus 701.

The bus 701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 7, but this does not mean that there is only one bus or only one type of bus.

The processor 702 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 703 is configured to communicate with the outside. For example, the communication interface 703 is configured to obtain a neural network model, and output a compressed neural network model.

The memory 704 may include a volatile memory (volatile memory), for example, a random access memory (random access memory, RAM). The memory 704 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 704 stores computer-readable instructions, and the processor 702 executes the computer-readable instructions, so that a computing device cluster 70 performs a compression method of the foregoing neural network model (or implements a function of a compression system 200).

Specifically, when an embodiment of the apparatus 600 shown in FIG. 6 is implemented, and functions of modules of the virtual network management apparatus 600 described in FIG. 6 such as an interaction module 602, a providing module 604, a determining module 606, a grouping module 608, and a setting module 610 are implemented by using software, software or program code needed for performing functions of the modules in FIG. 6 may be stored in at least one memory 704 in the controller 32. The at least one processor 702 executes the program code stored in the memory 704, so that the controller 32 performs the foregoing virtual network management method.

An embodiment of this application further provides a computer-readable storage medium. The computer-readable storage medium may be any usable medium that can be stored in a computing device such as the controller 32, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device such as the controller 32 to perform the foregoing virtual network management method.

An embodiment of this application further provides a computer program product. The computer program product includes one or more computer instructions. When the computer instructions are loaded and executed on a computing device such as a controller 32, procedures or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, a computing device, or a data center to another website, computing device, or data center in a wired (for example, a coaxial cable, an optical fiber, or a digital subscriber line (DSL)) or wireless (for example, infrared, radio, or microwave) manner. The computer program product may be a software installation package. When any method of the foregoing virtual network management method needs to be used, the computer program product may be downloaded and executed on the computing device such as the controller 32.

Descriptions of procedures or structures corresponding to the accompanying drawings have respective focuses. For a part that is not described in detail in a procedure or structure, refer to related descriptions of other procedures or structures.

## Claims

1. A virtual network management method, wherein the method comprises:
presenting a virtual network configuration interface to a user;
receiving an attribute that is of a target virtual network in a public cloud and that is configured by the user via the virtual network configuration interface, wherein the target virtual network is a virtual network used to bear a target service; and
providing the attribute of the target virtual network to a target node in the public cloud, wherein the attribute of the target virtual network is used by the target node to join the target virtual network.

2. The method according to claim 1, wherein the attribute of the target virtual network comprises one or more of a topology identifier, an acceleration identifier, a routing policy, and a source routing table; the topology identifier identifies a topology structure of the target virtual network; and the acceleration identifier identifies an access policy of the target virtual network.

3. The method according to claim 2, wherein the providing the attribute of the target virtual network to a target node in the public cloud comprises:
when the target node serves as an access node, providing one or more of the topology identifier, the acceleration identifier, the routing policy, and the source routing table to the access node; or
when the target node serves as a forwarding node, providing one or more of the topology identifier, the acceleration identifier, and the routing policy to the forwarding node.

4. The method according to any one of claims 1 to 3, wherein the attribute that is of the target virtual network and that is configured by the user comprises the topology identifier, and before the providing the attribute of the target virtual network to a target node in the public cloud, the method further comprises:
determining the target node based on the topology structure corresponding to the topology identifier.

5. The method according to claim 4, wherein the method further comprises:
grouping a plurality of nodes in the public cloud; and
the receiving an attribute that is of a target virtual network in a public cloud and that is configured by the user via the virtual network configuration interface comprises:
receiving the topology structure that is of the target virtual network and that is configured by the user based on the grouped nodes in the virtual network configuration interface, and obtaining the topology identifier of the topology structure.

6. The method according to claim 5, wherein the grouping nodes in the public cloud comprises:
receiving a grouping basis configured by the user via the virtual network configuration interface; and
grouping the nodes in the public cloud based on the grouping basis.

7. The method according to claim 6, wherein the grouping basis comprises one or more of home attributes of the nodes, geographical locations of the nodes, node types of the nodes, and computer room types of the nodes.

8. The method according to any one of claims 5 to 7, wherein the grouping nodes in the public cloud comprises:
receiving a candidate node configured by the user via the virtual network configuration interface, wherein the candidate node is a part or all of nodes in the public cloud; and
grouping the candidate node.

9. The method according to any one of claims 1 to 3, wherein the attribute that is of the target virtual network and that is configured by the user comprises at least one of the access policy and the routing policy, and the receiving an attribute that is of a target virtual network in a public cloud and that is configured by the user via the virtual network configuration interface comprises:
receiving at least one of the access policy and the routing policy that are of the target virtual network and that are configured by the user via the virtual network configuration interface, wherein the access policy or the routing policy meets a customer level or a service type of the target service.

10. The method according to claim 9, wherein the access policy comprises one or more of a proximity-based access policy, a delay-first access policy, and a cost-first access policy.

11. The method according to claim 9, wherein the routing policy comprises one or more of a maximum hop count-based routing policy, a delay-first routing policy, a cost-first routing policy, a packet loss rate-first routing policy, or a topology identifier-based routing policy.

12. The method according to any one of claims 1 to 11, wherein the method further comprises:
receiving node information provided by the target node in the target virtual network; and
setting the attribute of the target virtual network based on the node information.

13. The method according to any one of claims 1 to 12, wherein the target service comprises a cloud meeting or online education.

14. A virtual network management apparatus, wherein the apparatus comprises:
an interaction module, configured to present a virtual network configuration interface to a user, wherein
the interaction module is further configured to receive an attribute that is of a target virtual network in a public cloud and that is configured by the user via the virtual network configuration interface, and the target virtual network is a virtual network used to bear a target service; and
a providing module, configured to provide the attribute of the target virtual network to a target node in the public cloud, wherein the attribute of the target virtual network is used by the target node to join the target virtual network.

15. The apparatus according to claim 14, wherein the attribute of the target virtual network comprises one or more of a topology identifier, an acceleration identifier, a routing policy, and a source routing table; the topology identifier identifies a topology structure of the target virtual network; and the acceleration identifier identifies an access policy of the target virtual network.

16. The apparatus according to claim 15, wherein the providing module is specifically configured to:
when the target node serves as an access node, provide one or more of the topology identifier, the acceleration identifier, the routing policy, and the source routing table to the access node; or
when the target node serves as a forwarding node, provide one or more of the topology identifier, the acceleration identifier, and the routing policy to the forwarding node.

17. The apparatus according to any one of claims 14 to 16, wherein the attribute that is of the target virtual network and that is configured by the user comprises the topology identifier, and the apparatus further comprises:
a determining module, configured to determine the target node based on the topology structure corresponding to the topology identifier.

18. The apparatus according to claim 17, wherein the apparatus further comprises:
a grouping module, configured to group a plurality of nodes in the public cloud; and
the interaction module is specifically configured to:
receive the topology structure that is of the target virtual network and that is configured by the user based on the grouped nodes in the virtual network configuration interface, and obtain the topology identifier of the topology structure.

19. The apparatus according to claim 18, wherein the grouping module is specifically configured to:
receive a grouping basis configured by the user via the virtual network configuration interface; and
group the nodes in the public cloud based on the grouping basis.

20. The apparatus of claim 19, wherein the grouping basis comprises one or more of home attributes of the nodes, geographical locations of the nodes, node types of the nodes, and computer room types of the nodes.

21. The apparatus according to any one of claims 18 to 20, wherein the grouping module is specifically configured to:
receive a candidate node configured by the user via the virtual network configuration interface, wherein the candidate node is a part or all of nodes in the public cloud; and
group the candidate node.

22. The apparatus according to any one of claims 14 to 16, wherein the attribute that is of the target virtual network and that is configured by the user comprises at least one of the access policy and the routing policy, and the interaction module is specifically configured to:
receive at least one of the access policy and the routing policy that are of the target virtual network and that are configured by the user via the virtual network configuration interface, wherein the access policy or the routing policy meets a customer level or a service type of the target service.

23. The apparatus according to claim 22, wherein the access policy comprises one or more of a proximity-based access policy, a delay-first access policy, and a cost-first access policy.

24. The apparatus according to claim 22, wherein the routing policy comprises one or more of a maximum hop count-based routing policy, a delay-first routing policy, a cost-first routing policy, a packet loss rate-first routing policy, or a topology identifier-based routing policy.

25. The apparatus according to any one of claims 14 to 24, wherein the interaction module is further configured to:
receive node information provided by the target node in the target virtual network; and
the apparatus further comprises:
a setting module, configured to set the attribute of the target virtual network based on the node information.

26. The apparatus according to any one of claims 14 to 25, wherein the target service comprises a cloud meeting or online education.

27. A controller, wherein the controller comprises a processor and a memory, the memory stores computer-readable instructions, and the processor executes the computer-readable instructions, so that the controller performs the method according to any one of claims 1 to 13.

28. A virtual network management system, wherein the virtual network management system comprises a controller and a target node, and the controller is configured to perform the method according to any one of claims 1 to 13, to enable the target node to join a target virtual network.

29. A computer-readable storage medium, comprising computer-readable instructions, wherein the computer-readable instructions are used for implementing the method according to any one of claims 1 to 13.

30. A computer program product, comprising computer-readable instructions, wherein the computer-readable instructions are used for implementing the method according to any one of claims 1 to 13.
